# EUROPEAN PATENT SPECIFICATION

(11) **EP 3 825 192 B1**
(45) Date of publication and mention of the grant of the patent: **25.10.2023**
(21) Application number: 19210318.2
(22) Date of filing: 20.11.2019
(51) Int. Cl.: B60T 8/1755, B60W 30/08

(54) **BRAKE CONTROL SYSTEM**
BREMSSTEUERUNGSSYSTEM
SYSTÈME DE CONTRÔLE DES FREINS

(43) Date of publication of application: 26.05.2021
(73) Proprietor: Veoneer Sweden Safety Systems AB, 10302 Stockholm (SE)
(72) Inventor: PANTANO-DE-LUCA, Fabio, 85221 Dachau (DE); FRIKKEN, Joseph, Marysville, MI 48040 (US); TANG, Jiahong, 85232 Bergkirchen (DE); MATSUE, Masatoshi, 70839 Gerlingen (DE)
(74) Representative: Reichert & Lindner Partnerschaft Patentanwälte

(56) References cited:
- WO-A1-2015/114437
- AU-A1- 2016 202 499
- CA-A- 714 378

## Description

The invention relates to a brake control system for a vehicle. More specifically, the invention relates to a brake control system for a vehicle, wherein the brake control system has a post-collision automatic braking function to activate at least one brake of the vehicle upon detection of a collision of the vehicle.

Post-collision automatic braking systems nowadays are found in many vehicles. Such a system serves to activate one or more brakes of the vehicle upon detecting a collision of the vehicle. The reason behind this is to slow down and bring to rest the vehicle after a collision event to reduce the risk of subsequent collisions of the vehicle.

International publication WO 2015/114437 A1 of international application PCT/IB2015/000061 discloses a brake control system for a vehicle. The brake control system includes a post-collision automatic braking function to activate at least one brake of the vehicle upon detection of a collision of the vehicle. A mechanism is provided to release the at least one brake of the vehicle upon activation of the mechanism.

If a post-collision automatic braking system, after a collision, activates, as is its purpose, one or more brakes of the vehicle, there is the possibility that one or more wheels of the vehicle get locked and remain locked after the collision. This makes it difficult to move the vehicle for rescue operations, should these be required, or makes it difficult, in the case of a collision of minor severity, for the driver to move the vehicle off the lane (where it might be the cause of further collisions).

Therefore it is desirable to improve a brake control system of a vehicle in such a way that after activation of the post-collision automatic braking function motion of the vehicle is not impeded indefinitely.

This object is achieved by a brake control system according to claim 1. The dependent claims relate to advantageous embodiments.

The brake control system according to the invention for a vehicle includes a post-collision automatic braking function to activate at least one brake of the vehicle upon detection of a collision of the vehicle. According to the invention, the brake control system has a plurality of mechanisms configured to release the at least one brake upon activation of at least one mechanism of the plurality of mechanisms.

In this way, once the post-collision automatic braking function has been activated, at least one mechanism of the plurality of mechanisms can be activated to release the at least one brake. As a result, movement of the vehicle is not impeded by activated brakes. Therefore, it is easier to move the vehicle for rescue operations or simply off a lane after a collision. If there were only one such mechanism, then after a collision this mechanism may not be accessible or may be damaged. Providing the brake control system with more than one mechanism increases the chance of at least one mechanism remaining accessible and operational after a collision and thus increases the chance of successfully releasing the brakes. This is particularly true, if, according to the invention, the mechanisms of the plurality of mechanisms are positioned at different locations in the vehicle. Such different locations include at least one of, without being limited thereto, a trunk of the vehicle, an engine compartment of the vehicle, a passenger cabin of the vehicle.

A mechanism of the plurality of mechanisms configured to release the at least one brake may, upon its activation, achieve the release of the at least one brake in various ways. As non-limiting examples, the mechanism may send a signal directly to the at least one brake, e.g. to one or more actuators of the brake; alternatively, the mechanism may send a signal to an intermediate system, e.g. a data processing system, which intermediate system in turn sends a signal to the at least one brake, e.g. to one or more actuators of the brake; yet a further possibility is that the mechanism acts mechanically directly on the at least one brake.

In an embodiment, the at least one brake is only released after a pre-defined time-period has passed between the detection of a collision and the activation of at least one of the plurality of mechanisms. This avoids a, perhaps accidentally, too early release of the at least one brake, which would interfere with the operation of the post-collision automatic braking function, i.e. the at least one brake might accidentally be released before the vehicle has come to a stop.

In an embodiment, the plurality of mechanisms includes at least one of a mechanical mechanism, an electronic mechanism, a solid state mechanism, a software component mechanism. The software component mechanism may in particular be implemented in an embedded computing system on board of the vehicle having the brake control system according to the invention.

In an embodiment the plurality of mechanisms includes a remote-controlled mechanism. This is advantageous in situations where mechanisms for manual operation are not accessible, for example due to results of the collision which caused the activation of the at least one brake. The remote-controlled mechanism may also be a mechanism for both manual operation and remote control.

Generally speaking, a mechanism for manual operation may be activated, as non-limiting examples, via a switch, a button, a knob, a lever, a touchscreen, a joystick, or any combination thereof. A software component mechanism may be activated manually, for example via a touchscreen. There is, however, also the possibility that an embedded system in which the software component mechanism is implemented activates the software component mechanism if certain pre-programmed conditions are met. Such conditions may for example include that first a collision has been detected, and that, after at least a predefined period of time has passed since the detection of the collision, no motion of the vehicle is detected; in particular that no acceleration of the vehicle is detected and/or no rotations of the wheels of the vehicle are detected.

Below, the invention and its advantages will be illustrated further with reference to the accompanying figure.

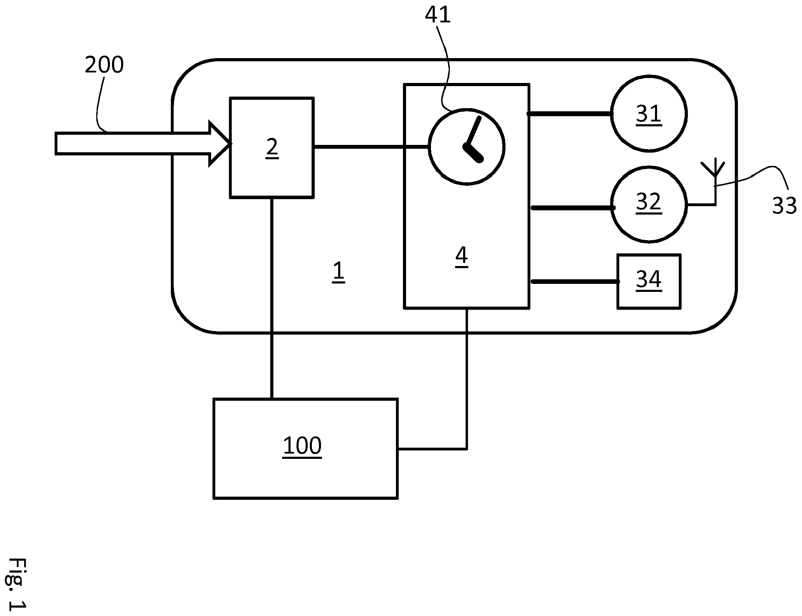

- Figure 1: shows a schematic diagram of a brake control system according to the invention.

The figure is intended for illustration of an embodiment only and not as a limitation of the invention.

**Fig. 1** shows a schematic diagram of a brake control system 1 according to the invention. The brake control system 1 receives a collision signal 200. The collision signal 200 may be generated by any means known in the art. The collision signal 200 activates a post-collision automatic braking function 2 implemented in the brake control system 1. The post-collision automatic braking function 2 may be implemented in hardware and/or software in any fashion known in the art. The post-collision automatic braking function 2 activates brake 100 of a vehicle (not shown) on board of which the brake control system 1 is implemented. In the embodiment shown the brake control system 1 has three mechanisms 31, 32, 34, each of which is configured to release brake 100 upon activation of the respective mechanism 31, 32, 34. Mechanism 31 is for manual operation, mechanism 32 is for both manual operation and operation via remote control. For the purposes of remote control, mechanism 32 includes a receiver 33. The receiver 33 is configured to receive remote control signals and upon reception of such a remote control signal provide a signal to mechanism 32 to activate mechanism 32. The receiver 33 may be configured to receive remote control signals which for example, and without limitation of the invention, are radio signals, infrared signals, light pulses, ultrasonic pulses. Mechanism 34 is implemented as a software component in an embedded system on board of the vehicle. Mechanisms 31, 32, 34 in this embodiment are connected to a data processing unit 4. If a mechanism 31, 32, 34 is activated, the data processing unit 4 receives a corresponding signal from the respective mechanism 31, 32, 34 and eventually generates a control signal to brake 100 to release brake 100. In this embodiment, the data processing unit 4 includes a timer 41. The post-collision automatic braking function 2, upon reception of collision signal 200, sends a signal to timer 41 to start the timer 41. If the data processing unit 4 receives a signal from one of the mechanisms 31, 32, 34, the data processing unit 4 will only generate a control signal to release brake 100, if, according to timer 41, a period of time longer than a pre-defined threshold has passed between the start of the timer 41 and the reception of a signal from one of the mechanisms 31, 32, 34. The pre-defined threshold is part of the configuration of the brake control system 1, in the embodiment shown more precisely part of the programming of the data processing unit 4. The mechanisms 31, 32, 34 are located at different locations within the vehicle.

### List of Reference Signs

- 1: brake control system
- 2: post-collision automatic braking function
- 4: data processing unit
- 31: mechanism
- 32: mechanism
- 33: receiver
- 34: mechanism
- 41: timer
- 100: brake
- 200: collision signal

## Claims

1. Brake control system (1) for a vehicle, the brake control system (1) including:
a post-collision automatic braking function (2) to activate at least one brake (100) of the vehicle upon detection of a collision of the vehicle;
**characterised by**
a plurality of mechanisms (31, 32, 34) configured to release the at least one brake (100) upon activation of at least one of the mechanisms (31, 32, 34) of the plurality of mechanisms (31, 32, 34);
the plurality of mechanisms (31, 32, 34) being positioned at different locations in the vehicle, the different locations including at least one of: trunk, engine compartment, passenger cabin.

2. Brake control system (1) according to claim 1, wherein the brake (100) is only released after a pre-defined time-period has passed between the detection of a collision and the activation of at least one mechanism of the plurality of mechanisms (31, 32, 34).

3. Brake control system (1) according to one of the previous claims, wherein the plurality of mechanisms (31, 32, 34) includes at least one of a mechanical mechanism, an electronic mechanism, a solid state mechanism, a software component mechanism.

4. Brake control system (1) according to claim 3, wherein the plurality of mechanisms includes a software component mechanism (34) implemented in an embedded system.

5. Brake control system (1) according to one of the previous claims, wherein the plurality of mechanisms includes a remote-controlled mechanism (32).

## Patentansprüche

1. Bremssteuerungssystem (1) für ein Fahrzeug, wobei das Bremssteuerungssystem (1) umfasst:
eine automatische Bremsfunktion (2) nach einer Kollision, um mindestens eine Bremse (100) des Fahrzeugs bei Erkennung einer Kollision des Fahrzeugs zu aktivieren;
**gekennzeichnet durch**
eine Vielzahl von Mechanismen (31, 32, 34), die so konfiguriert sind, dass sie die mindestens eine Bremse (100) bei Aktivierung von mindestens einem der Mechanismen (31, 32, 34) der Vielzahl von Mechanismen (31, 32, 34) lösen;
wobei die mehreren Mechanismen (31, 32, 34) an verschiedenen Stellen im Fahrzeug angeordnet sind, wobei die verschiedenen Stellen mindestens eines der folgenden Elemente umfassen: Kofferraum, Motorraum, Fahrgastraum.

2. Bremssteuerungssystem (1) nach Anspruch 1, wobei die Bremse (100) erst gelöst wird, nachdem eine vordefinierte Zeitspanne zwischen der Erkennung einer Kollision und der Aktivierung mindestens eines Mechanismus der Vielzahl von Mechanismen (31, 32, 34) verstrichen ist.

3. Bremssteuerungssystem (1) nach einem der vorhergehenden Ansprüche, wobei die Vielzahl von Mechanismen (31, 32, 34) mindestens einen mechanischen Mechanismus, einen elektronischen Mechanismus, einen Festkörpermechanismus und/oder einen Mechanismus mit Softwarekomponenten umfasst.

4. Bremssteuerungssystem (1) nach Anspruch 3, wobei die Vielzahl von Mechanismen einen Softwarekomponentenmechanismus (34) umfasst, der in einem eingebetteten System implementiert ist.

5. Bremssteuerungssystem (1) nach einem der vorhergehenden Ansprüche, wobei die Vielzahl von Mechanismen einen ferngesteuerten Mechanismus (32) umfasst.

## Revendications

1. Système de contrôle des freins (1) pour un véhicule, le système de contrôle des freins (1) comprenant :
une fonction de freinage automatique post-collision (2) pour activer au moins un frein (100) du véhicule lors de la détection d'une collision du véhicule ;
**caractérisé par**
une pluralité de mécanismes (31, 32, 34) configurés pour desserrer l'au moins un frein (100) lors de l'activation d'au moins un des mécanismes (31, 32, 34) de la pluralité de mécanismes (31, 32, 34) ;
la pluralité de mécanismes (31, 32, 34) étant positionnés à différents endroits du véhicule, les différents endroits comprenant au moins l'un des suivants : le coffre, le compartiment moteur, l'habitacle.

2. Système de contrôle des freins (1) selon la revendication 1, dans lequel le frein (100) n'est desserré qu'après qu'une période de temps prédéfinie s'est écoulée entre la détection d'une collision et l'activation d'au moins un mécanisme de la pluralité de mécanismes (31, 32, 34).

3. Système de contrôle des freins (1) selon l'une des revendications précédentes, dans lequel la pluralité de mécanismes (31, 32, 34) comprend au moins un mécanisme mécanique, un mécanisme électronique, un mécanisme à semiconducteurs, un mécanisme à composants logiciels.

4. Système de contrôle des freins (1) selon la revendication 3, dans lequel la pluralité de mécanismes comprend un mécanisme de composant logiciel (34) mis en oeuvre dans un système embarqué.

5. Système de contrôle des freins (1) selon l'une des revendications précédentes, dans lequel la pluralité de mécanismes comprend un mécanisme télécommandé (32).
